# EUROPEAN PATENT SPECIFICATION

(11) **EP 2 684 386 B1**
(45) Date of publication and mention of the grant of the patent: **29.11.2017**
(21) Application number: 12754853.5
(22) Date of filing: 09.03.2012
(51) Int. Cl.: F04B 13/00, F04B 53/06, F04B 53/16, F04B 53/00, G01N 30/32

(54) **PUMP HEAD OUTLET PORT**
PUMPENKOPF-AUSLASSÖFFNUNG
ORIFICE DE SORTIE DE TÊTE DE POMPE

(30) Priority: 10.03.2011 US 201161451229 P; 25.04.2011 US 201161478705 P
(43) Date of publication of application: 15.01.2014
(73) Proprietor: Waters Technologies Corporation, Milford, MA 01757 (US)
(72) Inventor: SHREVE, Joshua A., Franklin, Massachusetts 020308 (US); ALMEIDA, Neal, Cumberland, Rhode Island 02864 (US); ANGELOSANTO, John, North Attleboro, Massachusetts 02760 (US)
(74) Representative: Harding, Andrew Philip
(86) International application number: PCT/US2012/028408
(87) International publication number: WO 2012/122442

(56) References cited:
- GB-A- 1 414 675
- JP-A- H10 159 750
- US-A- 3 330 217
- US-A- 5 131 818
- US-A- 5 144 882
- US-A- 5 611 681
- US-A1- 2005 110 220
- US-A1- 2006 045 782
- US-A1- 2008 110 515
- US-A1- 2009 062 966
- US-A1- 2011 008 189

## Description

### FIELD OF THE INVENTION

The invention relates generally to pumps used in chromatography systems. More specifically, the invention relates to fluidic outlet or exit ports of a pump actuator.

### BACKGROUND

Liquid chromatography is an example of a field of applications wherein a pumping system takes in solvents and delivers a liquid solvent composition at elevated pressures to a sample manager, where a sample awaits injection into the mixture. Conventionally, high performance liquid chromatography (HPLC) employs pressures ranging between approximately 68.9 and 413.7 bar (1,000 and 6,000 psi). Pressures for performing ultra performance liquid chromatography (UPLC) may reach 1034 to 1379 bar (15,000 to 20,000 psi). The pumping systems can vary in configuration, typically employing two or more actuators, configured to cooperate in series or in parallel.

During a liquid chromatography run, an important factor for chromatographic performance is for the unswept volume within an actuator to be minimal. Unswept volume is preferably considered to be that section or volume of solvent that remains undelivered in the course of a given piston stroke. In many conventional pumps, an actuator's outlet port intersects the piston chamber. Any cavity within the actuator in fluidic communication with this chamber, but generally unperturbed by the piston stroke, can become a region of unswept volume. This unswept volume can decrease the efficiency of the pump and degrade the chromatography results. It can also impede priming of the pump head. In addition, any cavity situated physically higher than the outlet can become a bubble trap. Unswept bubble traps can also pose a problem to chromatography performance.

US5611681, GB1414675, US3330217 and JPH10159750 disclose known arrangements. In particular, JPH10159750 discloses an actuator with the features of the preamble of claim 1.

### SUMMARY

The present invention provides an actuator (10) comprising:
a pump head (24, 24') having a chamber (32, 32');
a gland (42);
a movable rod extending through the gland (42) into the chamber (32, 32') of the pump head (24, 24'); and
a plunger seal (38, 38') disposed in the gland (42) around the rod for sealing against fluidic leakage from the chamber (32, 32'), the pump head (24, 24') further including an outlet port (52) and an outlet channel (54, 58'), one end of the outlet channel (54, 58) being in communication with the outlet port (52) and the outlet channel (54, 58) providing a flow path for liquid in the chamber (32, 32') to travel towards the outlet port (52) in response to movement of the rod;
the plunger seal (38, 38') having an annular flange (66) that provides an OD (outer diameter) seal against the gland (42), the annular flange (66) defining a seal cavity (60, 60'), the other end of the outlet channel (54, 58) opening into the seal cavity (60, 60') of the plunger seal (38, 38'), wherein the fluidic path from the chamber (32, 32') to the outlet port (52, 52') traverses the seal cavity (60, 60'), characterised in that:
   the pump head (24, 24') further comprises a secondary outlet channel extending from the outlet port (52, 52') to the chamber (32, 32'), the secondary outlet channel providing an additional flow path for the liquid to travel from the chamber (32, 32') to the outlet port (52, 52') in response to the movement of the rod.

The present invention further provides an actuator, a pump and a liquid chromatography system as claimed.

### BRIEF DESCRIPTION OF THE DRAWINGS

The above and further advantages of this invention may be better understood by referring to the following description in conjunction with the accompanying drawings, in which like numerals indicate like structural elements and features in various figures. The drawings are not necessarily to scale, emphasis instead being placed upon illustrating the principles of the invention.
FIG. 1 is a cross-section diagrammatic view of an embodiment of an actuator of a pump used in liquid chromatography applications, the actuator comprising a pump head, wash housing, and seal assembly.
FIG. 2 is a detail cross-sectional view of the actuator in the region of the pump head, wash housing, and seal assembly, the pump head having an outlet channel leading to an outlet port.
FIG. 3 is a detail view of the outlet channel leading to the outlet port of the pump head.
FIG. 4 is an exploded isometric view of the pump head, wash housing, and seal assembly, with the pump head in the foreground and wash housing in the background.
FIG. 5 is another exploded isometric view of the pump head, wash housing, and seal assembly, the wash housing being in the foreground and the pump head being in the background.
FIG. 6 is another embodiment of fluidic assembly with a pump head having an outlet channel similar to the outlet channel shown in FIG. 3.

### DETAILED DESCRIPTION

Pumps and actuators described herein can be employed in high-pressure reciprocating and rotary applications, such as are commonly used in liquid chromatography. In some embodiments, the pumps and actuators include a fluidic assembly having a pump head coupled to a wash housing, a gland in either the pump head or washing housing, and a high-pressure seal assembly disposed within the gland. The pump head has an inlet port and an outlet port, each port being in fluidic communication with a chamber. Movement of a plunger within the chamber draws liquid into the chamber through the input port and pumps the liquid out of the chamber through an output port.

The input port intersects the chamber at one end, whereas the fluidic path from the chamber to the outlet port traverses a seal cavity. The seal cavity is an open region of the plunger seal disposed at the chamber's other end and facing the chamber. From the seal cavity, the fluidic path passes through an outlet channel that connects to the outlet port. The outlet channel extends through the pump head and opens into the gland at a place located strategically to facilitate the purging of gas bubbles and particles from the seal assembly and the gland. The location is strategically placed at a relatively high point in the seal cavity to which gas bubbles can escape. In addition, the location has the outlet channel situated almost as physically far away as possible from where the inlet port intersects the far end of the chamber, thus ensuring almost a complete sweep of the chamber length when liquid flows out of the pump head. Advantages stemming from the outlet channel location, in comparison to conventional actuators with an outlet port that intersects the chamber, are lower unswept volumes, improved purging of unwanted bubbles and particles, and improved priming of the pump.

Although described herein with respect to actuators, the principles of the invention extend to any type of pump with a pump head, for example, gear pump drives, parallel pumps, serial pumps.

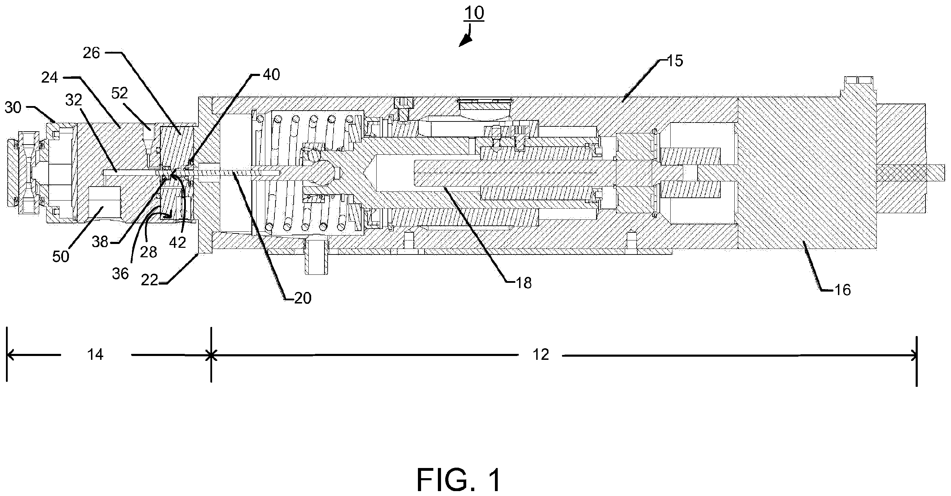

FIG. 1 shows an embodiment of an actuator 10 having a main actuator body 12 connected to a fluidic assembly 14. The main actuator body 12 includes an actuator housing 15, motor 16, and a drive mechanism 18 mechanically linked to a plunger 20. Although described in connection with reciprocating plungers, the fluidic outlet mechanisms described herein can also be used in actuators with rotary shafts, such as a shaft that rotates and turns a rotor fitted to a stator. The term "rod" is used herein to broadly encompass plungers, shafts, rods, and pistons, whether reciprocating or rotary. A support plate 22 is secured to the actuator body 12.

The fluidic assembly 14 includes a pump head 24 and a wash housing 26, and is secured to the other side of the support plate 22, opposite the main actuator body 12. The pump head 24 also has a recess 28 at one end adapted to receive and align the wash housing 26. A pressure transducer 30 is secured to the other end of the pump head 24, which allows monitoring of the internal pressure of the pump head 24 throughout the operation of the actuator 10.

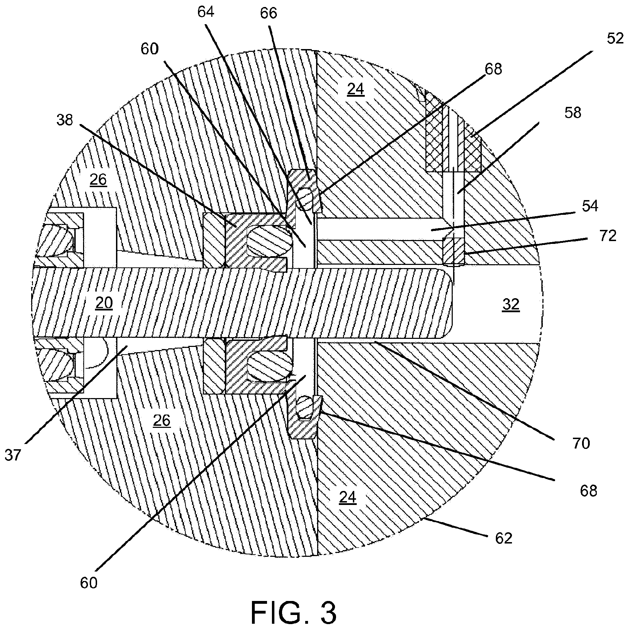

The pump head 24 includes a chamber 32,a pump-head abutment surface 36, a plunger seal 38, and a wash seal 40. The plunger 20 extends through the support plate 22, wash seal 40, wash housing 26, and plunger seal 38 into the chamber 32 of the pump head 24. The wash housing 26 provides a compartment 37 (FIG. 3) to collect liquid and wash the plunger 20 of any particulate that may form on the plunger surface. The plunger seal 38 and wash seal 40 serve to contain liquids within their appropriate quarters; the plunger seal 38 keeps liquid pressurized up to 1379 bar (20,000 psi) from leaking into the wash housing 26 and other unwanted areas of the pump head 24, and the wash seal 40 keeps the wash liquid in the compartment 37. In this embodiment of actuator, the plunger seal 38 resides within a gland 42 in the wash housing 26. The wash housing 26 and support plate 22 are described herein are examples of means for retaining the plunger seal 38 in the fluidic assembly 14. Alternatively, other embodiments of retaining means can be employed, for example, springs and fasteners.

The pump head 24 further includes an inlet port 50 and an outlet port 52 through which to receive and discharge liquids, respectively. The inlet port joins the chamber 32 at the chamber's remote end, whereas the outlet port is in fluidic communication with the chamber's other end through a seal cavity of the plunger seal 38.

In one embodiment, the actuator 10 is one of two independently controllable actuators of a binary solvent manager (BSM) pump that cooperate to deliver a pressurized solvent composition to the downstream components of a liquid chromatography system. The two actuators, called the primary actuator and the accumulator actuator, are configured serially. The primary actuator is the low-pressure side of the pump, where liquid intake from solvent reservoirs occurs at atmospheric pressure during the pump cycle. Liquid intake occurs in response to a backstroke of the plunger of primary actuator within the chamber. In response to a forward stroke of its plunger within the chamber, the primary actuator pressurizes and transfers the solvent to the accumulator actuator and system. Closure of an inlet check valve (not shown) ensures expulsion of the pressurized liquid from the chamber through outlet port, rather than out the inlet port. The accumulator actuator is the high-pressure side of the pump, maintaining the solvent at system pressure during the intake and transfer operations performed by the primary actuator. While the primary actuator intakes liquid, the accumulator actuator delivers solvent at system pressure, and while the primary actuator transfers liquid, the accumulator actuator intakes and receives the liquid at system pressure for the next delivery cycle. An example implementation of a BSM pump is the ACQUITY UPLC Binary Solvent Manager, manufactured by Waters Corp. of Milford, MA.

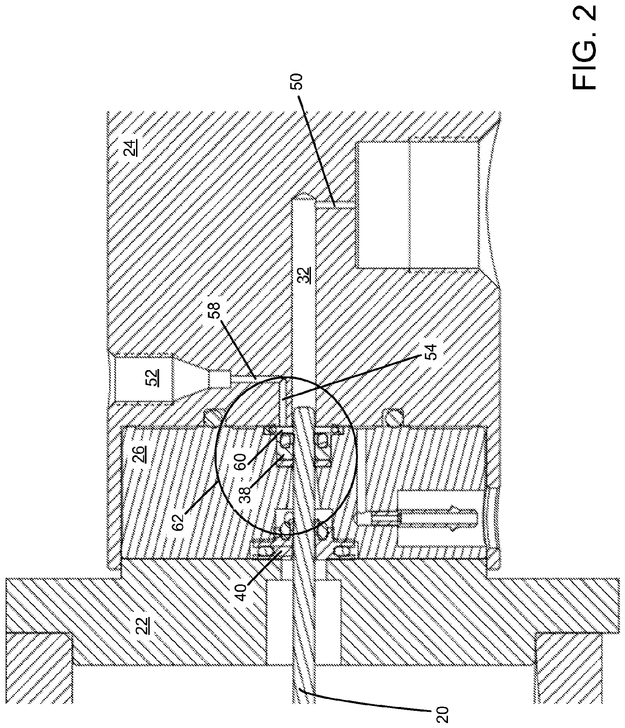

FIG. 2 shows an enlarged view of the fluidic assembly 14 near the pump head 24 and wash housing 26. The pump head 24 includes an inlet port 50, an outlet port 52, and a primary outlet channel 54. The outlet port 52 is adapted to closely receive a tube. The inlet port 50 is in communication with one end of the chamber 32, referred to as the remote end. The outlet port 52 is in communication with the primary outlet channel 54 through a secondary outlet channel 58. The other end of the primary outlet channel 54 opens into a seal cavity 60 of the plunger seal 38.

In this embodiment, the outlet port 52 opens at the top of the pump head 24. Although shown to open at the top, the outlet port 52 can open anywhere on the circumference of the pump head 24, provided it is in communication with the seal cavity 60 of the plunger seal 38. Preferably, the primary outlet channel 54 that brings the outlet port 52 into communication with the seal cavity 60 opens near the top of the seal cavity 60. Being near the highest point in the seal cavity, this location is near where any gas bubbles in the pumped liquid would be expected to rise and collect. Liquid pumped from the seal cavity into the primary outlet channel 54 thus carries with it any gas bubbles that may have collected at the mouth of the primary outlet channel 54.

In other embodiments, the outlet channel 54 can connect to the seal cavity 60 at other locations (e.g., alongside, slightly above, slightly below, or below the axis of the chamber 32). Although such embodiments may not be as effective purging gas bubbles as the embodiment having the outlet channel at the top, notwithstanding, these other embodiments may reduce the amount of unswept volume when compared to pump heads that have the outlet port intersect the chamber directly. In addition, preferably the outlet channel 54 is horizontal within the pump head 24, an orientation that facilitates machining of the outlet channel 54 feature. Notwithstanding, the outlet channel 54 can be machined at other angles, for example, sloping upwards towards the outlet port 52, such that the angle between the outlet port 52 (or the secondary outlet channel 58) and the primary outlet channel 54 is greater than 90 degrees and downstream is at a higher point than upstream (the terms downstream and upstream being used with respect to the direction of solvent flow, which flows from upstream to downstream). In addition, depending on the location of the outlet port 52, the outlet channel 54 can even angle downward or sideways away from the chamber 32, instead of running parallel to the chamber.

FIG. 3 shows a further enlarged view of the actuator 10 near the pump head 24 and wash housing 26 corresponding to the region within circle 62 in FIG. 2. One end of the outlet channel 54 intersects the secondary outlet channel 58 leading to the outlet port 52. To facilitate machining, the secondary outlet channel 58 can be made to extend past the point of intersection with the outlet channel 54 and into the chamber 32.

The other end of the outlet channel 54 opens into the seal cavity 60 near a highest point 64 in the seal cavity 60 to which a gas bubble in the liquid can rise. The highest point 64 is adjacent where an outer flange 66 of the plunger seal 38 produces an annular face seal 68 against the surface of the pump head 24.

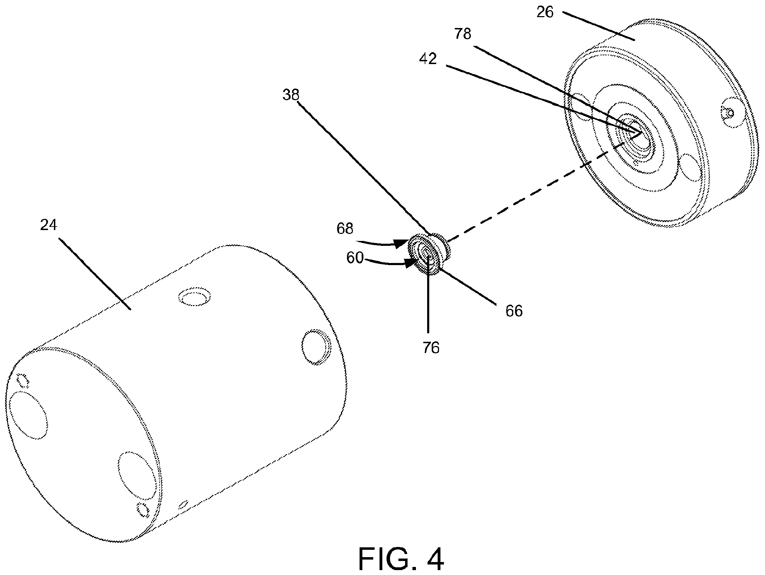

In FIG. 3, the plunger 20 appears near its furthermost rearward position. Inward movement of the plunger 20 into the chamber 32 operates to push liquid from the chamber 32 through the clearance 70 around the plunger 20 into the seal cavity 60, from the seal cavity 60 into the primary outlet channel 54, and from the primary outlet channel 54 out of the pump head 24 through the outlet port 52. (The amount of clearance 70 is exaggerated for clarity purposes, to show the fluid path to the primary outlet channel 54). Advantageously, the pressurized liquid forces any gas bubbles that might collect at this highest point 64. Further, the location of the outlet channel reduces the amount of unswept volume in comparison to conventional pump heads: conventionally, the outlet port of the pump head intersected the chamber, typically near the tip of the plunger at its furthest point of retraction; and the volume in the seal cavity and the clearance around the retracted plunger comprised the unswept volume in this conventional pump. In the actuator 10, described herein, the location of the primary outlet channel 54, in addition to increasing the length of the chamber that is swept during a piston stroke, produces a flow path through the seal cavity to ensure less unswept volume remains in the seal cavity after a piston stroke than for the conventional configuration. The secondary outlet channel 58 provides a second flow path for the pressurized liquid to travel towards the outlet port 52 in addition to the flow path provided by the primary outlet channel 54. If the extended portion of the secondary outlet channel 58 is filled with a plug 72, no second flow path for the pressurized liquid is provided. FIG. 4 shows an exploded isometric view of the pump head 24, wash housing 26, and plunger seal 38. The pump head 24 is in the foreground; the wash housing 26 in the background. The pump head 24 and wash housing 26 are generally cylindrical in shape. This view of the wash housing 26 shows the gland 42 adapted to closely receive the plunger seal 38, wherein a bore 76 of the plunger seal 38 aligns with a bore opening 78 of the wash housing 26. The view also shows the annular outer flange 66 of the plunger seal 38, which circumscribes the seal cavity 60 that narrows to the seal assembly bore 76.

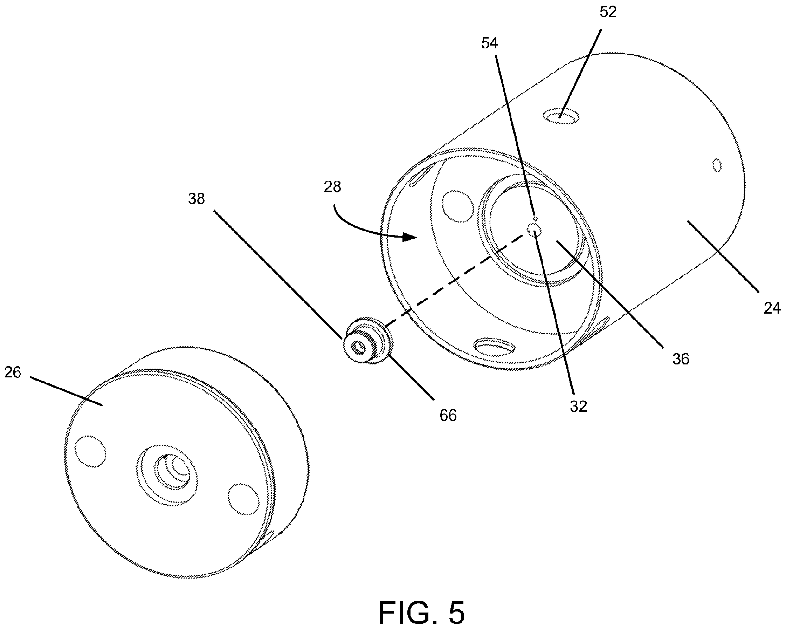

FIG. 5 shows another exploded isometric view, taken from the reverse perspective of that shown in FIG. 4, of the pump head 24 in the background, the wash housing 26 in the foreground, and the plunger seal 38 disposed between them. This view shows the recess 28 of the pump head 24, which receives the wash housing 26. The view also shows the pump-head abutment surface 36 surrounding an opening to the chamber 32 of the pump head 24 and an opening to the primary outlet channel 54 (FIG. 3). This opening to the primary outlet channel 54 is adjacent to the opening to the chamber 32 . The plunger seal 38, in particular, the face-sealing surface 68 (FIG. 4), contacts the pump-head abutment surface 36.

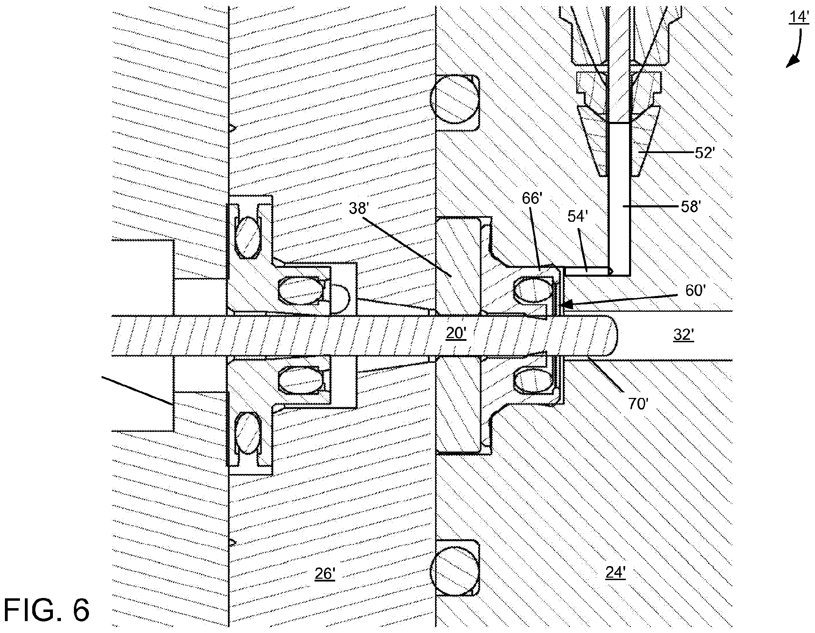

FIG. 6 is another embodiment of a region of an fluidic assembly 14' including a pump head 24', wash housing 26', and plunger seal 38'. (The prime (') after the reference numeral signifies a different embodiment of a structural feature previously described and associated with a corresponding reference numeral.) This embodiment demonstrates that the principles described herein can be practiced in actuators that use a variety of high-pressure seals and differently shaped glands for holding them. In this embodiment, the plunger seal 38' is disposed in a gland within the pump head 24'. The outer flange 66' of the plunger seal 38' provides an outer diameter (OD) seal against a gland surface. The pump head 24' further includes an outlet port 52' in communication with the primary outlet channel 54' through the secondary outlet channel 58'. The primary outlet channel 54' opens into the gland of the pump head 24', more specifically, into the seal cavity 60' of the plunger seal 38', which is disposed in the gland. The primary outlet channel 54' opens into the seal cavity 60' near a highest point within the seal cavity 60' to where gas bubbles in the liquid can rise. This highest point is near an upper corner of the gland, adjacent to an overhanging lip of outer flange 66' of the plunger seal 38'.
In FIG. 6, the plunger 20' appears near its furthermost retracted position. Inward movement of the plunger 20' into the chamber 32' operates to push liquid from the chamber 32' through the clearance 70' around the plunger 20' into the seal cavity 60', from the seal cavity 60' into the primary outlet channel 54', and from the primary outlet channel 54' out of the pump head 24' through the outlet port 52'.

While the invention has been shown and described with reference to specific preferred embodiments, it should be understood by those skilled in the art that various changes in form and detail may be made therein without departing from the scope of the invention as defined by the following claims. For example, although described herein primarily with respect to high-pressure reciprocating applications, the various embodiments of actuator assemblies can also be used in low-pressure reciprocating and rotary applications and in high-pressure rotary applications.

## Claims

1. An actuator (10) comprising:
a pump head (24, 24') having a chamber (32, 32');
a gland (42);
a movable rod extending through the gland (42) into the chamber (32, 32') of the pump head (24, 24'); and
a plunger seal (38, 38') disposed in the gland (42) around the rod for sealing against fluidic leakage from the chamber (32, 32'), the pump head (24, 24') further including an outlet port (52) and an outlet channel (54, 58'), one end of the outlet channel (54, 58) being in communication with the outlet port (52) and the outlet channel (54, 58) providing a flow path for liquid in the chamber (32, 32') to travel towards the outlet port (52) in response to movement of the rod;
the plunger seal (38, 38') having an annular flange (66) that provides an outer diameter seal against the gland (42), the annular flange (66) defining a seal cavity (60, 60'), the other end of the outlet channel (54, 58) opening into the seal cavity (60, 60') of the plunger seal (38, 38'), wherein the fluidic path from the chamber (32, 32') to the outlet port (52, 52') traverses the seal cavity (60, 60'),
**characterised in that**:
the pump head (24, 24') further comprises a secondary outlet channel extending from the outlet port (52, 52') to the chamber (32, 32') , the secondary outlet channel providing an additional flow path for the liquid to travel from the chamber (32, 32') to the outlet port (52, 52') in response to the movement of the rod.

2. The actuator (10) of claim 1, wherein the outlet channel (54, 58) opens into the seal cavity (60, 60') near a highest point in the seal cavity (60, 60') to which a gas bubble in the liquid can escape.

3. The actuator (10) of claim 1, wherein the outlet channel (54) extends substantially parallel to the chamber (32, 32').

4. The actuator (10) of claim 1, wherein the outlet channel (54) extends at substantially a right angle to the outlet port (52).

5. The actuator (10) of claim 1, wherein a wash housing (26) comprises the gland (42).

6. The actuator (10) of claim 5, wherein the wash housing (26) is coupled to the pump head (24, 24').

7. The actuator (10) of claim 1, wherein the pump head (24, 24') comprises the gland (42).

8. The actuator (10) of claim 1, wherein the movement of the rod in the chamber (32, 32') is a reciprocating movement.

9. A pump comprising:
a plurality of actuators (10) cooperating to pump solvent, at least one of the actuators according to any preceding claim.

10. A liquid chromatography system comprising:
a pump according to claim 9.

## Patentansprüche

1. Aktor (10), umfassend:
einen Pumpenkopf (24, 24') aufweisend eine Kammer (32, 32');
eine Stopfbuchse (42);
eine bewegbare Stange, die sich durch die Stopfbuchse (42) in die Kammer (32, 32') des Pumpenkopfes (24, 24') erstreckt; und
eine Stößeldichtung (38, 38'), die in der Stopfbuchse (42) um die Stange herum angeordnet ist, zum Abdichten gegen Fluidleckage aus der Kammer (32, 32'), wobei der Pumpenkopf (24, 24') ferner eine Auslassöffnung (52) und einen Auslasskanal (54, 58') beinhaltet, wobei ein Ende des Auslasskanals (54, 58) in Verbindung mit der Auslassöffnung (52) und dem Auslasskanal (54, 58) steht, wodurch ein Strömungsweg für Flüssigkeit in der Kammer (32, 32') zur Bewegung hin zur Auslassöffnung (52) als Reaktion auf die Bewegung der Stange bereitgestellt wird;
die Stößeldichtung (38, 38') aufweisend einen ringförmigen Flansch (66), der eine Außendurchmesserdichtung gegen die Stopfbuchse (42) bereitstellt, wobei der ringförmige Flansch (66) einen Dichtungshohlraum (60, 60') definiert, wobei sich das andere Ende des Auslasskanals (54, 58) in den Dichtungshohlraum (60, 60') der Stößeldichtung (38, 38') öffnet, worin der Fluidweg von der Kammer (32, 32') zur Auslassöffnung (52, 52') den Dichtungshohlraum (60, 60') durchquert,
**dadurch gekennzeichnet, dass**:
der Pumpenkopf (24, 24') ferner einen sekundären Auslasskanal umfasst, der sich von der Auslassöffnung (52, 52') zur Kammer (32, 32') erstreckt, wobei der sekundäre Auslasskanal einen zusätzlichen Strömungsweg für die Flüssigkeit zur Bewegung von der Kammer (32, 32') zur Auslassöffnung (52, 52') als Reaktion auf die Bewegung der Stange bereitstellt.

2. Aktor (10) nach Anspruch 1, worin sich der Auslasskanal (54, 58) in den Dichtungshohlraum (60, 60') nahe einem höchsten Punkt im Dichtungshohlraum (60, 60') öffnet, wohin eine Gasblase in der Flüssigkeit entweichen kann.

3. Aktor (10) nach Anspruch 1, worin sich der Auslasskanal (54) im Wesentlichen parallel zur Kammer (32, 32') erstreckt.

4. Aktor (10) nach Anspruch 1, worin sich der Auslasskanal (54) unter im Wesentlichen einem rechten Winkel zur Auslassöffnung (52) erstreckt.

5. Aktor (10) nach Anspruch 1, worin ein Waschgehäuse (26) die Stopfbuchse (42) umfasst.

6. Aktor (10) nach Anspruch 5, worin das Waschgehäuse (26) mit dem Pumpenkopf (24, 24') gekoppelt ist.

7. Aktor (10) nach Anspruch 1, worin der Pumpenkopf (24, 24') die Stopfbuchse (42) umfasst.

8. Aktor (10) nach Anspruch 1, worin die Bewegung der Stange in der Kammer (32, 32') eine Hin- und Herbewegung ist.

9. Pumpe, umfassend:
eine Mehrzahl von Aktoren (10), die zusammenwirken, um Lösungsmittel zu pumpen, wobei mindestens einer der Aktoren einem vorhergehenden Anspruch entspricht.

10. Flüssigkeitschromatographiesystem, umfassend:
eine Pumpe nach Anspruch 9.

## Revendications

1. Un actionneur (10) comprenant :
une tête de pompe (24, 24') ayant une chambre (32, 32') ;
un presse-étoupe (42) ;
une tige mobile s'étendant à travers le presse-étoupe (42) dans la chambre (32, 32') de la tête de pompe (24, 24') ; et
un joint de plongeur (38, 38') disposé dans le presse-étoupe (42) autour de la tige pour étanchéiser contre les fuites de fluide de la chambre (32, 32'), la tête de pompe (24, 24') incluant en outre un orifice de sortie (52) et un canal de sortie (54, 58'), une extrémité du canal de sortie (54, 58) étant en communication avec l'orifice de sortie (52) et le canal de sortie (54, 58) fournissant un trajet d'écoulement pour que le liquide dans la chambre (32, 32') circule vers l'orifice de sortie (52) en réponse à un mouvement de la tige ;
le joint de plongeur (38, 38') ayant une collerette annulaire (66) qui fournit un joint de diamètre extérieur contre le presse-étoupe (42), la collerette annulaire (66) définissant une cavité de joint (60, 60'), l'autre extrémité du canal de sortie (54, 58) s'ouvrant dans la cavité de joint (60, 60') du joint de plongeur (38, 38'), dans lequel le trajet fluidique de la chambre (32, 32') à l'orifice de sortie (52, 52') traverse la cavité de joint (60, 60'),
**caractérisé en ce que** :
la tête de pompe (24, 24') comprend en outre un deuxième canal de sortie s'étendant de l'orifice de sortie (52, 52') à la chambre (32, 32'), le deuxième canal de sortie fournissant un trajet d'écoulement supplémentaire pour que le liquide circule de la chambre (32, 32') à l'orifice de sortie (52, 52') en réponse au mouvement de la tige.

2. L'actionneur (10) selon la revendication 1, dans lequel le canal de sortie (54, 58) s'ouvre dans la cavité de joint (60, 60') près d'un point le plus haut dans la cavité de joint (60, 60') vers lequel une bulle de gaz dans le liquide peut s'échapper.

3. L'actionneur (10) selon la revendication 1, dans lequel le canal de sortie (54) s'étend sensiblement parallèle à la chambre (32, 32').

4. L'actionneur (10) selon la revendication 1, dans lequel le canal de sortie (54) s'étend sensiblement à angle droit à l'orifice de sortie (52).

5. L'actionneur (10) selon la revendication 1, dans lequel un boîtier de lavage (26) comprend le presse-étoupe (42).

6. L'actionneur (10) selon la revendication 5, dans lequel le boîtier de lavage (26) est accouplé à la tête de pompe (24, 24').

7. L'actionneur (10) selon la revendication 1, dans lequel la tête de pompe (24, 24') comprend le presse-étoupe (42).

8. L'actionneur (10) selon la revendication 1, dans lequel le mouvement de la tige dans la chambre (32, 32') est un mouvement alternatif.

9. Une pompe comprenant :
une pluralité d'actionneurs (10) coopérant pour pomper un solvant, un ou plusieurs des actionneurs selon l'une quelconque des revendications précédentes.

10. Un system de chromatographie liquide comprenant :
une pompe selon la revendication 9.
